# EUROPEAN PATENT APPLICATION

(11) **EP 4 779 733 A2**
(43) Date of publication of application: **22.07.2026**
(21) Application number: 26176354.4
(22) Date of filing: 04.05.2026
(51) Int. Cl.: H01M 10/04, H01M 10/42, H01M 50/105, H01M 50/533, H01M 50/588, H01M 50/593, H01M 50/595

(54) **BATTERY AND ELECTRIC DEVICE**

(30) Priority: 26.06.2025 CN 202521333718 U
(71) Applicant: Zhuhai Cosmx Power Co., Ltd., Zhuhai, Guangdong 519180 (CN)
(72) Inventor: LI, Guotai, Zhuhai, Guangdong, 519180 (CN)
(74) Representative: Vossius & Partner Patentanwälte Rechtsanwälte mbB

(57) **Abstract**

The present application discloses a battery and an electric device. The battery includes a wound core, a film housing, and a protective plate, a top sealing edge of the film housing being bent toward a top end face of the wound core, and the protective plate being located on the top sealing edge. The wound core includes a straight section, an arc section, and at least two tabs, a section of each tab protruding from the top sealing edge being bent toward the top end face of the wound core and located between the protective plate and the top sealing edge. A first buffer pad is provided between the protective plate and the top sealing edge, and the first buffer pad is located between two adjacent tabs of the wound core to compensate for a thickness difference caused by the absence of the tabs between the protective plate and the top sealing edge, so as to prevent excessive bending deformation of the protective plate, thereby reducing the risk of the tabs being pulled by the protective plate and deformed. In addition, at least one of surfaces of the straight section facing the film housing is provided with an insulation layer in a region near an end of the wound core provided with the tabs, and the insulation layer can prevent a short circuit caused by an electrode sheet at the head of the wound core folding inward or outward under pressure, thereby ensuring the safety of the battery.

## Description

### TECHNICAL FIELD

The present application relates to the technical field of batteries, and in particular to a battery and an electric device.

### BACKGROUND

For a pouch battery, in order to maximize the energy density level of the battery and make full use of the space of a top sealing groove of the pouch battery in width, a top sealing edge of a cell may be bent 90 degrees toward a deep recessed face of the cell, and then a protective plate may be placed flat on a top sealing edge of the head of the battery.

Since the protective plate is placed flat on the bent top sealing edge, the protective plate is supported from below only by welded tabs and nickel sheets, leading to the middle part of the protective plate being prone to bending deformation under pressure, which in turn makes the tabs also prone to deformation caused by the impact from the protective plate.

Therefore, how to reduce the risk of adverse effects on a cell when a protective plate is under pressure is a technical problem that needs to be solved urgently by those skilled in the art.

### SUMMARY

An objective of the present application is to provide a battery, which can effectively reduce the risk of adverse effects on tabs of a cell when a protective plate is under pressure, thereby improving the reliability of the battery. Another objective is to provide an electric device including the above battery.

In order to achieve the above objectives, the present application provides the following technical solutions.

A battery includes a wound core, a film housing, and a protective plate, where the film housing covers the wound core, and a top sealing edge of the film housing is bent toward a top end face of the wound core; the protective plate is parallel to the top end face, and is located on the top sealing edge; the wound core includes at least two tabs; a section of each of the tabs protruding from the top sealing edge is bent toward the top end face of the wound core, and is located between the protective plate and the top sealing edge; a first buffer pad is provided between the protective plate and the top sealing edge, and is located between two adjacent tabs of the wound core; and the wound core includes a straight section and an arc section, and at least one of surfaces of the straight section facing the film housing is provided with an insulation layer in a region near an end of the wound core provided with the tabs.

In some embodiments, an outer periphery of each of the tabs is coated with a tab adhesive, and a section of the tab adhesive exposed from the top sealing edge has a first preset spacing from the first buffer pad.

In some embodiments, the first buffer pad is a buffer pad having a compressibility in a range from 30% to 50%, and/or the first buffer pad is one or more of a foam pad, an aramid paper pad, or a Tyvek pad.

In some embodiments, the battery further includes an insulation member, the insulation member including a first attachment portion, a second attachment portion, and a protective portion, the protective portion being connected to a first side of the first attachment portion on one side and connected to a first side of the second attachment portion on the other side, a second side of the first attachment portion being fixedly connected to one surface of the film housing, a second side of the second attachment portion being fixedly connected to the other surface of the film housing, the protective portion being located at a top end of the top sealing edge, and the protective plate being located in a space between the protective portion and the top sealing edge; and the battery further includes a flexible printed circuit (FPC), one end of the FPC being located in the insulation member and electrically connected to the protective plate, the other end of the FPC being led out from the end in the insulation member and partially laid on one end of an outer end face of the protective portion, a second buffer pad being provided in a region of a portion of the outer end face of the protective portion away from the FPC, and a thickness of the second buffer pad being not less than a thickness of a portion of the FPC laid on the outer end face of the insulation member.

In some embodiments, the insulation member is a U-shaped adhesive tape; and/or the second buffer pad has a second preset spacing from the FPC; and/or a projection of the second buffer pad on an outer end face of the insulation member covers at least one of the tabs; and/or the projection of the second buffer pad on the outer end face of the insulation member at least partially overlaps with a projection of the first buffer pad on the outer end face of the insulation member; and/or the thickness of the second buffer pad is 0.05-0.5 mm greater than the thickness of the portion of the FPC laid on the outer end face of the insulation member.

In some embodiments, the outer periphery of each of the tabs is coated with the tab adhesive, and a projection of the second buffer pad on the top end face of the wound core covers a projection of the section of the tab adhesive, exposed from the top sealing edge, of at least one of the tabs on the top end face of the wound core.

In some embodiments, the second buffer pad is a silicone pad.

In some embodiments, a length of the insulation layer in the first direction is greater than a length of the first buffer pad in the first direction, two ends of the insulation layer extend beyond two ends of the first buffer pad, the two ends of the insulation layer have a third preset spacing from the arc sections on two sides of the wound core, and the first direction is the direction of distribution of two tabs on the wound core.

In some embodiments, a first end of the insulation layer is attached to a separator of the wound core, and a second end of the insulation layer is attached to an electrode sheet of the wound core; the first end of the insulation layer is an end extending toward the top end face of the wound core, and the second end of the insulation layer is an end opposite the first end of the insulation layer; and a top edge of the first end of the insulation layer has a fourth preset spacing from a top edge of the separator.

An electric device includes the battery described in any one of the above embodiments.

Compared with the related art, the above technical solutions have at least the following advantages.

In the battery according to the present application, a first buffer pad is provided between the protective plate and the top sealing edge, and the first buffer pad is located between two adjacent tabs of the wound core, that is, the first buffer pad can fill the gap between the protective plate and the top sealing edge to compensate for a thickness difference between the protective plate and the top sealing edge caused by the absence of the tabs, such that the protective plate can be supported by the first buffer pad, so as to prevent excessive bending deformation of the protective plate toward the cell and thus reduce the risk of the tabs being pulled by the protective plate and deformed, thereby effectively improving the reliability of the battery. In addition, at least one of surfaces of the straight section facing the film housing is provided with an insulation layer in a region near an end of the wound core provided with the tabs, and the insulation layer can prevent a short circuit caused by an electrode sheet at the head of the wound core folding inward or outward under pressure, thereby ensuring the safety of the battery.

The electric device according to the present application includes the battery described above, and thus also has the corresponding advantages.

### BRIEF DESCRIPTION OF THE DRAWINGS

To describe technical solutions in embodiments of the present application or in the prior art more clearly, the following briefly describes the drawings needed for describing the embodiments or the prior art. It is clear that the drawings in the following descriptions are merely part of embodiments of the present application, and a person of ordinary skill in the art may still derive other drawings from the provided drawings without creative efforts.
FIG. 1 is a perspective schematic structural diagram of a battery according to a specific implementation of the present application.
FIG. 2 is a front view of the battery.
FIG. 3 is a schematic structural diagram the battery in FIG. 2, with an insulation member removed.
FIG. 4 is an enlarged view of part A in FIG. 3.
FIG. 5 is a schematic structural front view of a cell.
FIG. 6 is a schematic structural top view of the cell.

Reference signs:
10. Film housing, 11. Top sealing edge, 20. Wound core, 21. Straight section, 22. Arc section, 23. Tab, 24. Tab adhesive, 25. Insulation layer, 201. Positive electrode, 202. Negative electrode, 203. Separator; 30. Insulation member, 31. First attachment portion, 32. Second attachment portion, 33. Protective portion; 40. First buffer pad; 50. FPC; 60. Protective plate; 70. Second buffer pad.

### DETAILED DESCRIPTION OF EMBODIMENTS

The technical solutions in the embodiments of the present application will be clearly and completely described below with reference to the accompanying drawings in the embodiments of the present application. Apparently, the embodiments described are some of, rather than all of, the embodiments of the present application. All other embodiments obtained by those of ordinary skill in the art based on the embodiments of the present application without creative efforts shall fall within the scope of protection of the present application.

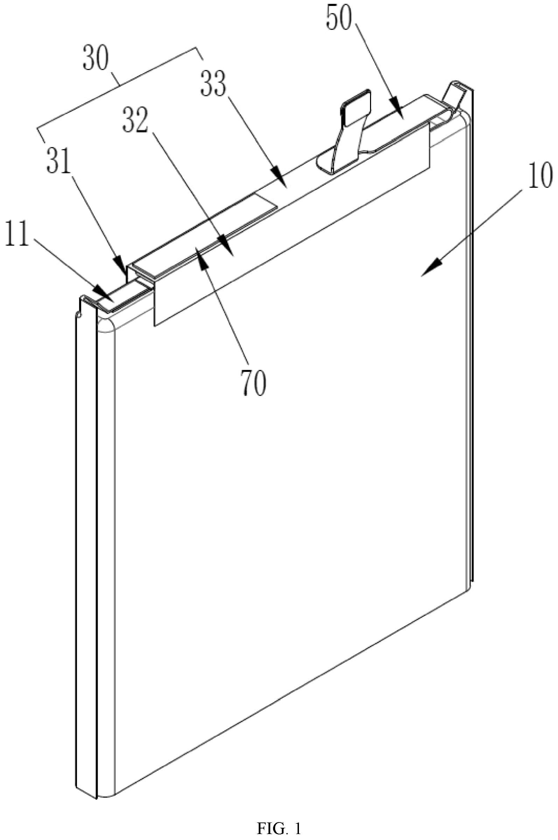

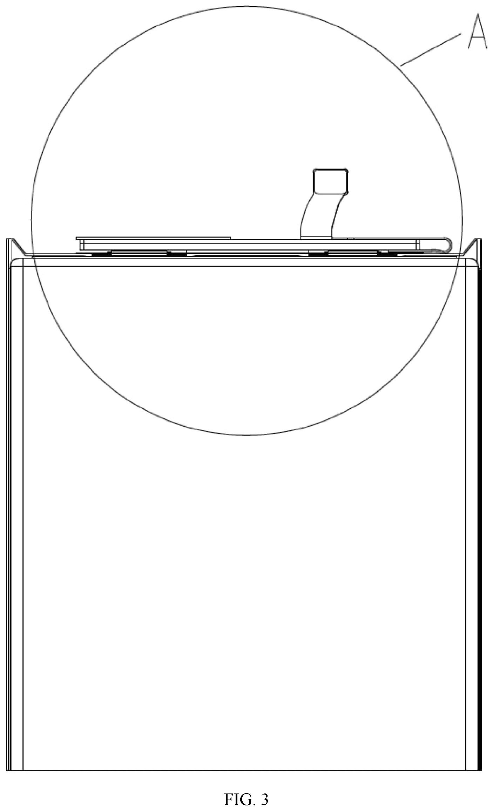

Referring to FIGS. 1 to 6, a battery according to an embodiment of the present application includes a cell and a protective plate 60. The cell includes a wound core 20 and a film housing 10. The film housing 10 is preferably an aluminum plastic film housing 10. The film housing 10 covers the wound core 20, and a top sealing edge 11 of the film housing 10 is bent toward a top end face of the wound core 20. The protective plate 60 is parallel to the top end face of the wound core 20, and the protective plate 60 is located on the top sealing edge 11. The wound core 20 includes a straight section 21, an arc section 22, and at least two tabs 23. A section of each tab 23 protruding from the top sealing edge 11 is bent toward the top end face of the wound core 20, and is located between the protective plate 60 and the top sealing edge 11, that is, the protective plate 60 can protect the tabs 23. In an existing battery, the part between a protective plate 60 and a top sealing edge 11 without tabs 23 is in a suspended state, making the suspended part of the protective plate 60 prone to deformation under pressure. In the battery according to the present application, a first buffer pad 40 is provided between the protective plate 60 and the top sealing edge 11, and the first buffer pad 40 is located between two adjacent tabs 23 of the wound core 20, that is, the first buffer pad 40 can fill the gap between the protective plate 60 and the top sealing edge 11 to compensate for a thickness difference between the protective plate 60 and the top sealing edge 11 caused by the absence of the tabs 23, such that the protective plate 60 can be supported by the first buffer pad 40, so as to prevent excessive bending deformation of the protective plate 60 toward the cell and thus reduce the risk of the tabs 23 being pulled by the protective plate and deformed 60, thereby effectively improving the reliability of the battery. In addition, in the battery according to the present application, at least one of surfaces of the straight section 21 opposite the film housing 10 is provided with an insulation layer 25 in a region near the end of the wound core 20 provided with the tabs 23, that is, the insulation layer 25 is provided on one or both surfaces of the straight section 21 opposite the film housing 10. When the first buffer pad 40 is compressed, an electrode sheet at the head of the wound core 20 is pressed, the electrode sheet at the head of the wound core 20 referring to an electrode sheet at an end of the wound core 20 near the tab 23, and the insulation layer 25 can prevent a short circuit caused by the electrode sheet at the head of the wound core 20 folding inward or outward under pressure, thereby ensuring the safety of the battery.

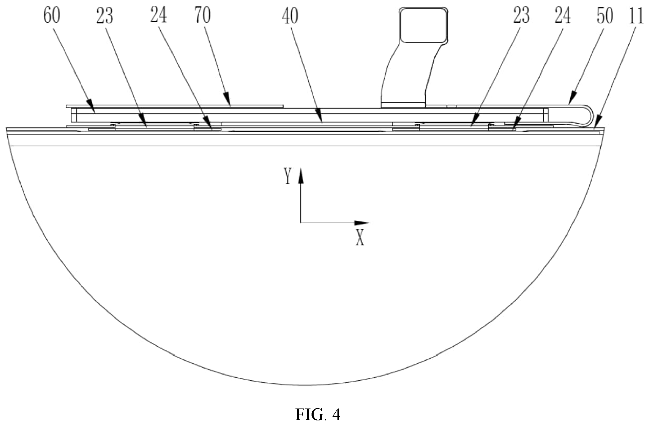

In some embodiments, as shown in FIG. 4, an outer periphery of each tab 23 is coated with a tab adhesive 24, and a section of the tab adhesive 24 exposed from the top sealing edge 11 has a first preset spacing from the first buffer pad 40. The first preset spacing may be dimensioned in a range from 0 to 1 mm, so as to prevent the first buffer pad 40 from pressing the tab 23 when being compressed. In addition, a thickness of the first buffer pad 40 may be in a range from 0.4 to 1 mm. The thickness of the first buffer pad 40 should not be insufficient or excessive. The insufficient thickness may lead to insufficient support, and the excessive thickness may cause the middle portion of the protective plate 60 to bulge, increasing the length of the battery in a Y-direction. The outer end face thereof does not extend beyond the outer end face of the tab 23, that is, the dimension of the first buffer pad 40 in the Y-direction is not greater than the dimension of the tab 23 in the Y-direction.

In some embodiments, the first buffer pad 40 is a buffer pad having a compressibility in a range from 30% to 50%. The compressibility of the buffer pad should not be excessive or insufficient. The insufficient compressibility cannot provide sufficient buffering effect for the protective plate 60 and thus cannot absorb impact force, which will increase the risk of a short circuit caused by the cell being pressed; and the excessive compressibility will lead to insufficient support, making the protective plate 60 prone to deformation. The thickness of the first buffer pad 40 should not be excessive or insufficient, and a top face of the first buffer pad 40 does not extend beyond the top face of the tab 23. When the tab 23 is connected to the protective plate 60 via a nickel sheet, the top face of the first buffer pad 40 does not extend beyond the top face of the nickel sheet. The first buffer pad 40 is one or more of a foam pad, an aramid paper pad, or a Tyvek pad. For example, any two or three of these pads may be selected and stacked in the Y-direction, and/or any two or three of these pads are selected and distributed in an X-direction.

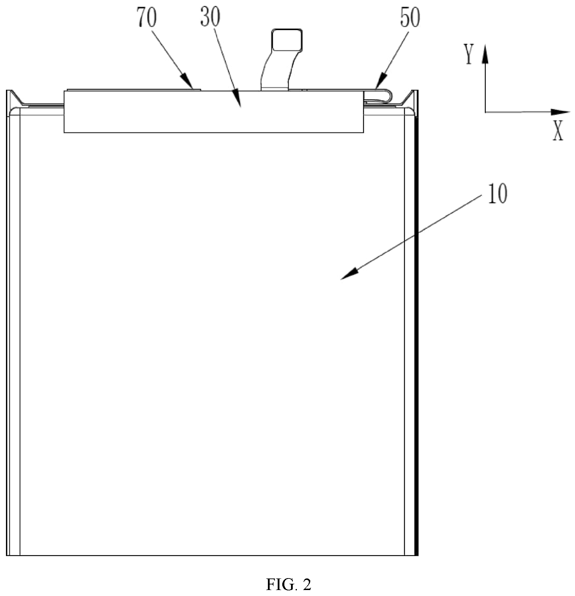

In some embodiments, the battery further includes an insulation member 30. The insulation member 30 includes a first attachment portion 31, a second attachment portion 32, and a protective portion 33. One side of the protective portion 33 is connected to a first side of the first attachment portion 31, and the other side thereof is connected to a first side of the second attachment portion 32. The first attachment portion 31, the second attachment portion 32 and the protective portion 33 preferably form an integral structure. A second side of the first attachment portion 31 is fixedly connected to one surface of the film housing 10, and a second side of the second attachment portion 32 is fixedly connected to the other surface of the film housing 10. For example, as shown in FIG. 1, the first side of the first attachment portion 31 is its upper side, and the second side thereof is its lower side; and the first side of the second attachment portion 32 is its upper side, and the second side thereof is its lower side. The second side of the first attachment portion 31 is attached to one of outer surfaces of the film housing 10 corresponding to the straight section 21 of the wound core 20, and the second side of the second attachment portion 32 is attached to the other outer surface of the film housing 10 corresponding to the straight section 21 of the wound core 20. The protective portion 33 is located at a top end of the top sealing edge 11, and the protective plate 60 is located in a space between the protective portion 33 and the top sealing edge 11. The battery further includes an FPC 50. One end of the FPC 50 is located in the insulation member 30 and electrically connected to the protective plate 60, and the other end is led out from the end in the insulation member 30 and partially laid on one end of an outer end face of the protective portion 33. The outer end face of the protective portion 33 refers to an end face of the protective portion 33 away from the cell. Specifically, as shown in FIGS. 1, 2 and 4, the FPC 50 includes a first section, a bent section, a second section and a third section which are arranged in sequence. The first section is located inside the first insulation member 30, the FPC 50 changes the direction via the bent section such that the second section is laid on the outer end face of the protective portion 33, and the third section is bent relative to the second section such that the end of the third section is away from the cell. A second buffer pad 70 is provided in a region of a portion of the outer end face of the protective portion 33 away from the FPC 50. The second buffer pad 70 is preferably a silicone pad. A thickness of the second buffer pad 70 is not less than a thickness of the portion of the FPC 50 laid on the outer end face of the protective portion 33. As shown in FIGS. 1 and 2, a portion of the section of the FPC 50 is laid at a right end of the outer end face of the protective portion 33, for example, the second section of the FPC 50 is laid at the right end of the outer end face of the protective portion 33; and the second buffer pad 70 is laid at a left end of the outer end face of the protective portion 33. After the battery is placed in a battery compartment, the second buffer pad 70 abuts against a wall of the battery compartment, which can prevent the FPC 50 from abutting against the wall of the battery compartment, so that the battery compartment is buffered by means of the second buffer pad 70 when being subjected to an impact, so as to prevent the risk of the FPC 50 breaking caused by a rigid impact on the FPC 50 from the battery compartment.

In some embodiments, the insulation member 30 is preferably a U-shaped adhesive tape. Two branch ends of the U-shaped adhesive tape are fixedly arranged on two surfaces of the straight section 21 of the cell. The protective plate 60 is located within the U-shaped adhesive tape. An outer end face of the U-shaped adhesive tape is a flat surface parallel to the top end face of the wound core 20. The second buffer pad 70 is attached to the outer end face of the U-shaped adhesive tape. One end of the FPC 50 is located within the U-shaped adhesive tape and is then electrically connected to the protective plate 60, and the other end thereof extends from one side of the U-shaped adhesive tape and is bent and thus attached to the end of the outer end face of the U-shaped adhesive tape away from the second buffer pad 70.

In some embodiments, the second buffer pad 70 has a second preset spacing from the FPC 50 to avoid overlapping between the second buffer pad 70 and the FPC 50. The minimum dimension of the second preset spacing is 1 mm to provide the FPC 50 with space to move. If the second buffer pad 70 is excessively long, after the battery is placed in a battery compartment, the battery compartment will compress the FPC 50 via the second buffer pad 70, resulting in the FPC 50 having no space to move in both the X-direction and the Y-direction, thereby increasing the risk of the FPC 50 being pulled apart when the battery is dropped.

In some embodiments, a projection of the second buffer pad 70 on the outer end face of the insulation member 30 covers at least one tab 23 to protect the tab 23 that is covered. For example, as shown in FIG. 4, the projection of the second buffer pad 70 in the Y-direction covers a projection of the left tab 23 in the Y-direction, a length of the second buffer pad 70 in the X-direction is greater than a length of the tab 23 in the X-direction, and two ends of the tab 23 in the X-direction do not extend beyond two ends of the second buffer pad 70 in the X-direction.

In some embodiments, the projection of the second buffer pad 70 on the outer end face of the insulation member 30 at least partially overlaps a projection of the first buffer pad 40 on the outer end face of the insulation member 30, so that the external force applied to the first buffer pad 40 can be partially transmitted to the first buffer pad 40 via the protective plate 60, so as to prevent deformation of the cell under pressure. For example, as shown in FIG. 4, the projections of the second buffer pad 70 and the first buffer pad 40 in the Y-direction partially overlap, that is, part of the structure at the right end of the second buffer pad 70 is located directly above part of the structure at the left end of the first buffer pad 40.

In some embodiments, the thickness of the second buffer pad 70 is 0.05-0.5 mm greater than the thickness of the part of the FPC 50 laid on the outer end face of the insulation member 30. The thickness of the second buffer pad 70 should not be excessive or insufficient. An excessive thickness increases the length of the battery in the Y-direction, and an insufficient thickness causes the FPC 50 to move in small space, making it difficult to reduce the risk of the FPC 50 being pulled apart when the battery drops.

In some embodiments, the outer periphery of each tab 23 is coated with the tab adhesive 24, and a length of the tab adhesive 24 in a first direction is greater than a length of the tab 23 in the first direction. The length of the second buffer pad 70 in the first direction is greater than a length of a section of the tab adhesive 24 on one tab 23 exposed from the top sealing edge 11 in the first direction. The first direction is a direction of distribution of two tabs 23 on the cell, that is, the X-direction shown in FIG. 2. The two ends of the second buffer pad 70 preferably extend more than 1 mm beyond the two ends of the tab adhesive 24, respectively, so as to protect the tab 23.

In some embodiments, the insulation layer 25 is preferably adhesive tape, and a manufacturing process for a cell includes at least the following steps of bonding the adhesive tape to the cell after the wound core 20 is wound; bending a top sealing edge of a head portion of the cell by 90 degrees, followed by adhesive dispensing and pressure holding to ensure a bending effect; attaching a first buffer pad 40 to the top sealing edge, and then placing a protective plate 60 on the top sealing edge of the cell; shaping an FPC 50, bonding the U-shaped adhesive tape to the head portion of the cell, and then bending and shaping the FPC 50; and finally, attaching the second buffer pad 70 to an outer end face of the U-shaped adhesive tape.

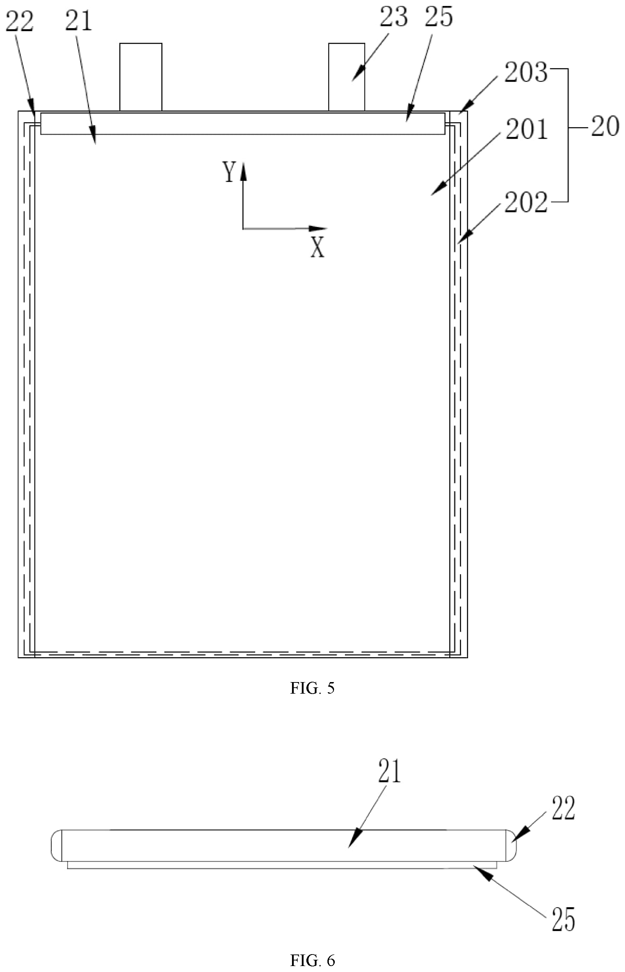

In some embodiments, a length of the insulation layer 25 in the first direction is greater than a length of the first buffer pad 40 in the first direction. Two ends of the insulation layer 25 extend beyond the two ends of the first buffer pad 40. The length beyond the two ends of insulation layer 25 is greater than 1 mm, and the two ends of the insulation layer 25 have a third preset spacing from the arc sections 22 on two sides of the wound core 20. That is, the insulation layer 25 is attached to the straight section 21 of the wound core 20 but is not attached to the arc section of the wound core 20, so as to avoid poor attachment, specifically as shown in FIGS. 5 and 6, the first direction being a direction of distribution of two tabs 23 on the wound core 20, that is, the X-direction shown in FIG. 5.

In some embodiments, a first end of the insulation layer 25 is attached to a separator 203 of the wound core 20, and a second end of the insulation layer 25 is attached to an electrode sheet of the wound core 20; the first end of the insulation layer 25 is an end extending toward the top end face of the wound core 20, and the second end of the insulation layer 25 is an end opposite the first end of the insulation layer 25; and a top edge of the first end of the insulation layer 25 has a fourth preset spacing from a top edge of the separator 203. The wound core 20 includes a positive electrode 201, a negative electrode 202, and the separator 203 located between the positive electrode 201 and the negative electrode 202. A first end of the insulation layer 25 is attached to a positive electrode 201, and a second end of the insulation layer 25 is attached to the separator 203 of the cell.

The embodiments of the present application further provide an electric device including the battery according to any one of the above embodiments. The electric device may be a mobile phone, a computer, etc. The electric device includes a battery compartment, and the battery is placed in the battery compartment. The beneficial effects of the electric device may be referred to the battery according to any one of the above embodiments, and thus are not described herein again.

It should be noted that in the description, relationship terms such as "first" and "second" are merely used to distinguish an entity from other entities, and do not necessarily require or imply that any such actual relationship or order exists between those entities.

All embodiments in the description are described in a progressive manner. Each embodiment focuses on differences from other embodiments. For the same or similar parts between various embodiments, reference may be made to each other.

The battery and the electric device of the present application are described in detail above. The principle and implementations of the present application are described herein by using specific examples, the above descriptions of the embodiments are merely intended to help understand the core concept of the present application. It should be noted that for those of ordinary skills in the art, several improvements and modifications may also be made to the present application without departing from the principle of the present application, and these improvements and modifications also fall within the scope of protection of the claims of the present application.

## Claims

1. A battery, comprising a wound core (20), a film housing (10), and a protective plate (60), wherein the film housing (10) covers the wound core (20), and a top sealing edge (11) of the film housing (10) is bent toward a top end face of the wound core (20); the protective plate (60) is parallel to the top end face, and is located on the top sealing edge (11); the wound core comprises at least two tabs (23); a section of each of the tabs (23) protruding from the top sealing edge (11) is bent toward the top end face of the wound core (20), and is located between the protective plate (60) and the top sealing edge (11); a first buffer pad (40) is provided between the protective plate (60) and the top sealing edge (11), and the first buffer pad (40) is located between two adjacent tabs (23) of the wound core (20); and the wound core (20) comprises a straight section (21) and an arc section (22), and at least one of surfaces of the straight section (21) facing the film housing (10) is provided with an insulation layer (25) in a region near an end of the wound core (20) provided with the tabs (23).

2. The battery according to claim 1, wherein an outer periphery of each of the tabs (23) is coated with a tab adhesive (24), and a section of the tab adhesive (24) exposed from the top sealing edge (11) has a first preset spacing from the first buffer pad (40).

3. The battery according to claim 1, wherein the first buffer pad (40) is a buffer pad having a compressibility in a range from 30% to 50%, and/or the first buffer pad (40) is one or more of a foam pad, an aramid paper pad, or a Tyvek pad.

4. The battery according to claim 1, wherein the battery further comprises an insulation member (30), the insulation member (30) comprising a first attachment portion (31), a second attachment portion (32), and a protective portion (33), the protective portion (33) being connected to a first side of the first attachment portion (31) on one side and connected to a first side of the second attachment portion (32) on the other side, a second side of the first attachment portion (31) being fixedly connected to one surface of the film housing (10), a second side of the second attachment portion (32) being fixedly connected to the other surface of the film housing (10), the protective portion (33) being located at a top end of the top sealing edge (11), and the protective plate (60) being located in a space between the protective portion (33) and the top sealing edge (11); and the battery further comprises a flexible printed circuit (50), one end of the flexible printed circuit (50) being located in the insulation member (30) and electrically connected to the protective plate (60), the other end of the flexible printed circuit (50) being led out from the end in the insulation member (30) and partially laid on one end of an outer end face of the protective portion (33), a second buffer pad (70) being provided in a region of a portion of the outer end face of the protective portion (33) away from the flexible printed circuit (50), and a thickness of the second buffer pad (70) being not less than a thickness of a portion of the flexible printed circuit (50) laid on the outer end face of the protective portion (33).

5. The battery according to claim 4, wherein the insulation member (30) is a U-shaped adhesive tape; and/or the second buffer pad (70) has a second preset spacing from the flexible printed circuit (50); and/or a projection of the second buffer pad (70) on an outer end face of the insulation member (30) covers at least one of the tabs (23); and/or the projection of the second buffer pad (70) on the outer end face of the insulation member (30) at least partially overlaps with a projection of the first buffer pad (40) on the outer end face of the insulation member (30); and/or the thickness of the second buffer pad (70) is 0.05-0.5 mm greater than the thickness of the portion of the flexible printed circuit (50) laid on the outer end face of the insulation member (30).

6. The battery according to claim 4, wherein the outer periphery of each of the tabs (23) is coated with the tab adhesive (24), and a length of the second buffer pad (70) in a first direction is greater than a length of the section of the tab adhesive (24) on one of the tabs (23) exposed from the top sealing edge (11) in the first direction, the first direction being a direction of distribution of two tabs (23) on the wound core (20).

7. The battery according to claim 4, wherein the second buffer pad (70) is a silicone pad.

8. The battery according to claim 1, wherein a length of the insulation layer (25) in the first direction is greater than a length of the first buffer pad (40) in the first direction, two ends of the insulation layer (25) extend beyond two ends of the first buffer pad (40), the two ends of the insulation layer (25) have a third preset spacing from the arc sections (22) on two sides of the wound core (20), and the first direction is the direction of distribution of two tabs (23) on the wound core (20).

9. The battery according to claim 8, wherein a first end of the insulation layer (25) is attached to a separator (203) of the wound core (20), and a second end of the insulation layer (25) is attached to an electrode sheet of the wound core (20); the first end of the insulation layer (25) is an end extending toward the top end face of the wound core (20), and the second end of the insulation layer (25) is an end opposite the first end of the insulation layer (25); and a top edge of the first end of the insulation layer (25) has a fourth preset spacing from a top edge of the separator (203).

10. An electric device, comprising the battery according to any one of claims 1 to 9.
